Europäisches Patentamt

European Patent Office

Office européen des brevets

(11) Numéro de publication: **0 263 728 B1**

(12) **FASCICULE DE BREVET EUROPEEN**

(45) Date de publication du fascicule du brevet:
09.05.90

(51) Int. Cl.⁵: **B29C 55/20**, G02B 6/04, G02B 6/44

(21) Numéro de dépôt: 87401985.4

(22) Date de dépôt: 04.09.87

(54) **Tube souple à coefficient de dilatation linéaire réduit, son procédé de fabrication et dispositif en faisant application.**

(30) Priorité: 08.09.86 FR 8612575

(43) Date de publication de la demande:
13.04.88 Bulletin 88/15

(45) Mention de la délivrance du brevet:
09.05.90 Bulletin 90/19

(84) Etats contractants désignés:
AT BE CH DE ES GB IT LI LU NL SE

(56) Documents cités:
EP-A- 0 092 009
DE-A- 1 479 921
DE-B- 1 161 679
FR-A- 2 534 700
GB-A- 1 599 106
GB-A- 2 024 715
GB-A- 2 079 970
GB-A- 2 124 972
US-A- 3 620 825
US-A- 4 154 783

PATENT ABSTRACTS OF JAPAN,
vol. 8, no. 223(P-307)[1660] 12 octobre 1984 &
JP-A-59 105 601 (NIPPON DENSHIN DENWA
KOSHA) 19-06-1984

(73) Titulaire: SOCIETE INDUSTRIELLE DE LIAISONS
ELECTRIQUES - SILEC, 64bis, rue de Monceau,
F-75008 Paris(FR)
Titulaire: SAT Société Anonyme de
Télécommunications, 40, avenue de New York,
F-75116 Paris(FR)

(72) Inventeur: Audoux, Christian, 1 rue Grande,
F-77130 Montereau(FR)
Inventeur: Rivas, Edouard, 33 rue Etienne Thibault,
F-77130 Montereau(FR)
Inventeur: Rossignol, Georges, 12 rue Léo Lagrange,
F-77130 Montereau(FR)

(74) Mandataire: Fruchard, Guy et al, CABINET
BOETTCHER 23, rue la Boétie, F-75008 Paris(FR)

## Description

Dans le domaine des télécommunications par fibres optiques, on fait fréquemment appel à des tubes souples dont le rôle est de repérer, protéger et guider les fibres dans les parties de leur parcours où elles ne sont pas intégrées dans un câble.

A titre d'exemples, on peut citer les liaisons entre câbles à joncs rainurés et systèmes de connexion dans les boîtiers d'épissurage et de répartition, les sorties d'émetteurs et de récepteurs, etc...

D'une manière générale, l'extrémité du tube souple vient se raccorder soit à l'extrémité d'un câble, soit à un support intégré à un composant.

Dans le cas particulier du dispositif d'épanouissement (D.E) faisant l'objet de la demande de brevet français n° 2 534 700, les tubes souples sont fixés sur une tête permettant d'extraire les fibres d'un jonc rainuré ; la tête est elle-même fixée au jonc et l'autre extrémité des tubes est fixée à un boîtier de connexion.

Les tubes souples sont habituellement réalisés en matériaux thermoplastiques extrudés dont le coefficient de dilation linéaire $\alpha L$ est compris entre 500 et 1500 x $10^{-7}K^{-1}$ (par degré), à comparer avec celui du verre, qui est de l'ordre de 5 à 10. $10^{-7}K^{-1}$. Il en résulte une dilation différentielle susceptible de provoquer des contraintes mécaniques sur les fibres et sur les connexions.

Dans leurs utilisations courantes, les tubes souples sont disposés en spikes, permettant de stocker une réserve de fibre. Le diamètre intérieur des tuves étant égal au minimum à deux à trois fois le diamètre exterieur de la fibre, il en résulte un degré de liberté theoriquement suffisant pour compenser la dilatation différentielle, à condition, toutefois, que la fibre puisse glisser librement dans le tube et qu'elle soit convenablement positionée au moment du montage.

Dans le cas où ces conditions ne peuvent pas être remplies, ou lorsque les écarts de température sont trop importants, des contraintes mécaniques (courbures, traction) s'exercent sur la fibre et les connexions avec les conséquences suivantes:

— affaiblissement réversible ou irréversible du signal,

— danger de rupture des fibres à long terme.

Il est connu, en particulier du document EP-A 92 009, qu'un traitement d'étirage à une température inférieure à la température de fusion ou de ramollissement des matériaux thermoplatiques peut provoquer une forte anisotropie de leurs propriétés physiques, en particulier de leur coefficient de dilatation. Il est possible d'obtenir par ce moyen des tubes souples ayant un coefficient de dilatation linéaire longitudinal $\alpha L$ très nettement réduit par rapport à celui du matériau initial.

A titre d'exemple, pour un tube souple en polypropylène, il est possible d'obtenir des valeurs de $\alpha L$ inférieures à $100.10^{-7}K^{-1}$.

Cependant, il a été cosntaté que le traitement d'étirage, lorsqu'il est suffisant pour obtenir un coefficient de dilatation linéaire acceptable, par exemple inférieur à $400.10^{-7}K^{-1}$ pour du tube en polypropylène, entraîne une grande sensibilité à l'apparition de fibrilles superficielles. Ces fibrilles se forment à la surface du tube, notamment par frottement. Elles constituent une gêne importante dans les opérations de fabrication des tubes ou des dispositifs d'épanouissement ainsi que dans leur utilisation.

Le but de l'invention est de réaliser un tube souple en matériau thermoplastique ayant un coefficient de dilatation linéaire moyen, par exemple inférieur à $300.10^{-7}K^{-1}$ dans l'intervalle de températures $-30°C$ à $+60°C$ et ne donnant pas lieu à formation de fibrilles superficielles au cours des opérations de fabrication et de montage.

En vue de la réalisation de ce but, on prévoit selon l'invention un procédé de fabrication d'un tube flexibel caractérisé en ce qu'il comporte les étapes de:

a) réaliser une préforme tubulaire en matériau thermoplastique comportant une couche de base ayant un coefficient de dilatation thermique selon une direction longitudinale de la préforme et une couche de revêtement ayant une épaisseur telle que l'influence de la couche de revêtement sur le coefficient de dilatation est négligeable,

b) chauffer la préforme pour porter la couche de base à une température d'étirage qui est inférieure à la température de fusion de la couche de base et simultanément étirer longitudinalement la préforme selon un rapport d'étirage réduisant le coefficient de dilatation thermique de la couche de base; et porter la couche de revêtement à une température évitant l'apparition de fibrilles au rapport d'étirage considéré,

c) soumettre la préforme étirée à un traitement de stabilisatio thermique à une température supérieure d'au moins 10°C à la température maximale d'utilisation.

On a constaté qu'il y a un taux d'étirage critique qui conduit à l'apparition de fibrilles; ce taux d'étirage critique varie en fonction de la nature du matériau, et pour un même matériau polymérique, en fonction de sa masse moléculaire.

On peut donc obtenir des tubes souples à faible $\alpha L$ et sans fibrille en combinant dans un tube double couche:

— un matériau de base Mb qui, après étirage dans le rapport Si/Sf = r, présente un coefficient de dilatation nettement réduit,

— un matériau de revêtement Mr qui, après étirage dans le même rapport r, présente des caractéristiques physiques peu modifiées, en particulier pas de tendance à la fibrillation,

les deux matériaux ayant une bonne adhérence l'un sur l'autre.

Les phases de la fabricaiton de tels tubes sont les suivantes:

a/ extrusion d'une préforme tubulaire en deux couches de préférence coextrudées en une seule passe,

b/ étirage dans le rapport r à une température inférieure à la température de fusion du matériau de base Mb,

c/ traitement de stabilisation thermique à une température supérieure d'au moins 10°C à la température maximale d'utilisation.

On pourra avoir deux matériaux de même point de fusion. Dans ce cas, les propriétés du matériau de revêtement seront peu modifiées par l'étirage. Les températures de fusion pourront être differentes. Dans un mode d'application avantageux de l'invention, la température de fusion du matériau de revêtement sera inférieure à la température d'étirage. Le matériau de revêtement sera lors à l'état liquide pendant l'étirage, et cette opération n'aura donc aucune incidence sur ses propriétés après refroidissement.

L'épaisseur e du matériau Mr sur le tube terminé doit être supérieure à 2 microns, et de préférence à 5 microns pour qu'il n'y ait pas apparition de fibrilles.

D'autre part, l'épaisseur de Mr ne doit pas être trop importante par rapport à l'épaisseur totale du tube pour que son influence sur $\alpha L$ soit négligeable :
$$e\, Mr \,/\, e \text{ totale} \leqslant_{\alpha\mu\rho}\hspace{-0.3em}\tilde{} \; 0,2 \text{ et de préférence} < 0,1$$
Pour obtenir une bonne adhérence entre les couches, Mb et Mr sont de préférence de nature chimique voisine, par exemple des polyoléfines.

A titre d'exemple :
Mb = polypropylène de masse moléculaire élevée pour lequel le taux d'étirage critique re $\approx$ 5,5.

Mr = polyéthylène haute densité pour lequel re > 10.

Avec ces deux matériaux, on réalise par extrusion une préforme tubulaire en double couche de diamètre intérieur 1,3 mm et de diamètre extérieur 2,6 mm, la couche extérieure (Mr) ayant une épaisseur de 0,03 mm.

Cette préforme est ensuite réchauffée à une température comprise entre 120°C et 160°C et étirée dans un rapport r = 6,5.

Le tube obtenu est enfin stabilisé par traitement thermique de 12 heures à 90°C.

Ce tube présente un $\alpha L$ moyen $<200.10^{-7}\ K^{-1}$ entre -30°C et +50°C. Il ne donne pas lieu à formation de fibrilles par frottement.

Les matériaux Mb et Mr peuvent être de même nature chimique, par exemple des polypropylènes ayant des masses moléculaires sensiblement différentes :
Mb, étant un polypropylène d'indice de fusion mesuré à 190°C sous une charge de 5 kg, $IF_{190,5}=1$,
Mr, étant un polypropylène d'$IF_{190,5} =8$
Les résultats obtenus avec ce couple de matériaux sont similaires à ceux obtenus avec le couple polyproplène/polyéthylène.

Les tubes souples ayant souvent une fonction de repérage des fibres, il est possible de différencier différents tubes par des couleurs différentes; par exemple, les tubes d'un même dispositif d'épanouissement sont repérés par un code de couleurs. Dans le cadre de la présente invention, ce repérage peut se faire par coloration dans la masse du matériau de revêtement externe (Mr).

Comme application particulière des tubes de la présente invention, on peut citer les dispositifs d'épanouissement faisant l'objet de la demande de brevet français n° 82 17483.

## Revendications

1. Procédé de fabrication d'un tube souple comportant les étapes suivantes:
   a) réaliser une préforme tubulaire en matériau thermoplastique comportant une couche de base (Mb) ayant un coefficient de dilatation thermique selon une direction longitudinale de la préforme et une couche de revêtement (Mc) ayant une épaisseur telle que l'influence de la couche de revêtement sur le coefficient de dilatation est négligeable,
   b) chauffer la préforme pour porter la couche de base à une température d'étirage qui est inférieure à la température de fusion de la couche de base et simultanément étirer longitudinalement la préforme selon un rapport d'étirage réduisant le coefficient de dilatation thermique de la couche de base; et porter la couche de revêtement à une température évitant l'apparition de fibrilles au rapport d'étirage considéré,
   c) soumettre la préforme étirée à un traitement de stabilisatio nthermique à une température supérieure d'au moins 10°C à la température maximale d'utilisation.

2. Procédé selon la revendication 1, caractérisé en ce que la préforme est obtenue par coextrusion de la couche de base et de la couche de revêtement.

3. Procédé selon la revendication 1 ou la revendication 2, caractérisé en ce que la couche de base a une épaisseur représentant au moins 80% de l'épaisseur totale de la couche de base et la couche de revêtement.

4. Procédé selonla revendication 1 à 3, caractérisé en ce que la couche de base et la couche de revêtement sont réalisées en polyoléfines.

5. Procédé selon la revendication 4, caractérisé en ce que la couche de base et la couche de revêtement sont en polypropylène, la couche de revêtement ayant un poids moléculaire inférieur à la couche de base.

6. Procédé selon la revendication 4, caractérisé en ce que la couche de base est en polypropylène et la couche de revêtement est en polyéthylène.

## Claims

1. A process for the production of a flexible tube comprising the following steps:
   a) producing a tubular preform of thermoplastic material comprising a base layer (Mb) having a coefficient of thermal expansion in a longitudinal direction of the preform and a covering layer (Mc) of a thickness such that the influence of the covering layer on the coefficient of expansion is negligible,
   b) heating the preform to raise the base layer to a drawing temperature which is lower than the melting temperature of the base layer and simultaneously longitudinally drawing the preform with a drawing ratio which reduces the coefficient of thermal expansion of the base layer; and raising the covering layer to a temperature which avoids the appearance of fibrils at the drawing ratio in question, and

c) subjecting the drawn preform to a thermal stabilisation treatment at a temperature which is at least 10°C higher than the maximum temperature of use.

2. A process according to claim 1 characterised in that the preform is obtained by co-extrusion of the base layer and the covering layer.

3. A process according to claim 1 or claim 2 characterised in that the base layer is of a thickness which represents at least 80% of the total thickness of the base layer and the covering layer.

4. A process according to claims 1 to 3 characterised in that the base layer and the covering layer are made of polyolefins.

5. A process according to claim 4 characterised in that the base layer and the covering layer are of polypropylene, the covering layer being of a lower molecular weight than the base layer.

6. A process according to claim 4 characterised in that the base layer is of polypropylene and the covering layer is of polyethylene.

## Patentansprüche

1. Verfahren zum Herstellen eines biegsamen Schlauchs, welches die folgenden Schritte umfaßt:
a) Herstellen eines rohrförmigen Formteils aus thermoplastischem Material, umfassend eine Basisschicht (Mb), die in Längsrichtung des Formteils einen thermischen Dehnungskoeffizienten hat, und eine Mantelschicht (Mc), die eine derartige Dicke hat, daß der Einfluß der Mantelschicht auf den Dehnungskoeffizienten veranchlässigbar ist,
b) Erwärmen des Formteils, um die Basisschicht auf eine Ziehtemperatur unterhalb der Schmelztemperatur der Basisschicht zu bringen, und gleichzeitiges Längsziehen des Formteils gemäß einem Ziehverhältnis, das den thermischen Dehnungskoeffizienten der Basisschicht verringert; und Überführen der Mantelschicht auf eine Temperatur, bei welcher das Auftreten von Fibrillen bei dem betrachteten Ziehverhältnis verhindert wird,
c) Unterziehen des gezogenen Formteils einer thermischen Stabilisierungsbehandlung bei einer Temperatur, die wenigstens 10°C oberhalb der maximalen Verwendungstemperatur liegt.

2. Verfahren nach Anspruch 1, dadurch gekennzeichnet, daß das Formteil durch Koextrusion von der Basisschicht und der Mantelschicht erhalten wird.

3. Verfahren nach Anspruch 1 oder 2, dadurch gekennzeichnet, daß die Basisschicht eine Dicke hat, die wenigstens 80% der Gesamtdicke der Basisschicht und der Mantelschicht entspricht.

4. Verfahren nach Anspruch 1 bis 3, dadurch gekennzeicht, daß die Basisschicht und die Mantelschicht aus Polyolefinen hergestellt sind.

5. Verfahren nach Anspruch 4, dadurch gekennzeichnet, daß die Basisschicht und die Mantelschicht aus Polypropylen bestehen, wobei die Mantelschicht ein Molekulargewicht hat, das unterhalb des Molekulargewichts der Basisschicht liegt.

6. Verfahren nach Anspruch 4, dadurch gekennzeichnet, daß die Basisschicht auf Polypropylen und die Mantelschicht aus Polyäthylen besteht.